(19) Europäisches Patentamt

European Patent Office

Office européen des brevets

(11) EP 0 566 085 B1

(12) **EUROPEAN PATENT SPECIFICATION**

(45) Date of publication and mention
of the grant of the patent:
**28.02.1996  Bulletin 1996/09**

(51) Int. Cl.⁶: **B23C 5/20**

(21) Application number: **93106062.8**

(22) Date of filing: **14.04.1993**

(54) **Milling insert**

Frässchneideinsatz

Plaquette de coupe à fraiser

(84) Designated Contracting States:
**AT CH DE ES FR GB IT LI SE**

(30) Priority:  **17.04.1992 IL 101636**

(43) Date of publication of application:
**20.10.1993  Bulletin 1993/42**

(73) Proprietor: **ISCAR LIMITED
Migdal Tefen 24959 (IL)**

(72) Inventors:
• **Satran, Amir
Kfar havradim 24960 (IL)**
• **Smilovici, Carol
Acre 24404 (IL)**

(74) Representative: **VOSSIUS & PARTNER
D-81634 München (DE)**

(56) References cited:
**US-A- 5 158 402**

## Description

This invention relates to exchangeable hard metal cutting inserts for use with a rotary milling cutter, comprising a holder in which are formed one or more peripheral recesses in which are respectively and releasably mounted a corresponding number of such inserts, the or each recess furthermore providing for a swarf space in front of each insert.

## BACKGROUND OF THE INVENTION

In EP-A 0 480 576, there is disclosed a cutting insert for use with a rotary milling cutter tool having a cutting edge defined between a cutting rake surface and a relief flank and having a base edge defined between the relief flank and the base surface. The cutting insert is characterized in that the cutting edge comprises a plurality of successive component cutting edges and intermediate edges respectively located between the successive component cutting edges, each component cutting edge having respective leading and trailing extremities, the trailing extremity of one component cutting edge merging with the leading extremity of a succeeding component cutting edge via an intermediate edge, the intermediate edge being directed from the trailing extremity of the one component cutting edge towards the base edge, each normal to an axis of rotation of the cutter tool which passes through a trailing extremity of one component cutting edge, intersecting the successive component cutting edge so that during a milling operation, successive component cutting edges overlap.

As explained in the prior patent specification, with such a cutting insert and in view of the fact that the component cutting edges are very short, the resultant forces exerted on the cutting insert by the chips formed by these short cutting edges are relatively low and, in consequence, the vibrations induced in the tool and the degree of "chatter" encountered, are minimal.

Whilst, as indicated, the use of such a cutting insert in milling operations is effective in reducing undesirable vibrations and "chatter", the milled surface produced thereby tends to be undesirably serrated and this, of course, in many circumstances is undesirable.

It is therefore an object of the present invention to provide a new and improved exchangeable cutting insert for use in milling, in which the above-referred-to disadvantage is substantially reduced or overcome.

## BRIEF SUMMARY OF THE INVENTION

According to the present invention there is provided a cutting insert for use with a rotary milling cutter tool and having a cutting edge defined between a cutting rake surface and a relief flank and having a base edge defined between said relief flank and a base surface; said cutting edge comprising a plurality of successive component cutting edges and intermediate edges respectively located between successive component cutting edges; each component cutting edge having respective leading and trailing extremities, the trailing extremity of one component cutting edge merging with the leading extremity of the succeeding component cutting edge via an intermediate edge, said intermediate edge being directed from said trailing extremity of said one component cutting edge towards said base edge; successive component cutting edges overlapping so that during a milling operation successive component cutting edges overlap; characterized in that said successive component cutting edges associated with each relief flank are convex shaped and are substantially located on a curved envelope defined by the rotation of a generator about a rotational axis of said insert, said generator being substantially coplanar with said rotational axis.

With such a milling cutting insert, the desired reduced vibration and "chatter"-free operation as disclosed in the prior patent specification are achieved, but now combined with a possibility of producing a substantially smooth milled surface.

## BRIEF SUMMARY OF THE DRAWINGS

One embodiment of a hard metal cutting insert in accordance with the invention, for use with a rotary milling cutter, will now be described by way of example and with reference to the accompanying drawings, in which:

**Fig. 1** is a perspective view of the cutting insert in accordance with the invention;
**Fig. 2** is a plan view from above of the insert shown in Fig. 1;
**Fig. 3** is a side elevation of the insert shown in Figs. 1 and 2;
**Fig. 4** is a schematic side elevation of the insert shown in Figs. 1, 2 and 3 when mounted on a cylindrical milling cutter tool;
**Fig. 5** is a schematic representation of component cutting edges of an insert as shown in Figs. 1, 2 and 3 in conjunction with the curved envelope on which they lie; and
**Fig. 6** is a view on an enlarged scale of a detail shown in Fig. 5.

## DETAILED DESCRIPTION OF A PREFERRED EMBODIMENT

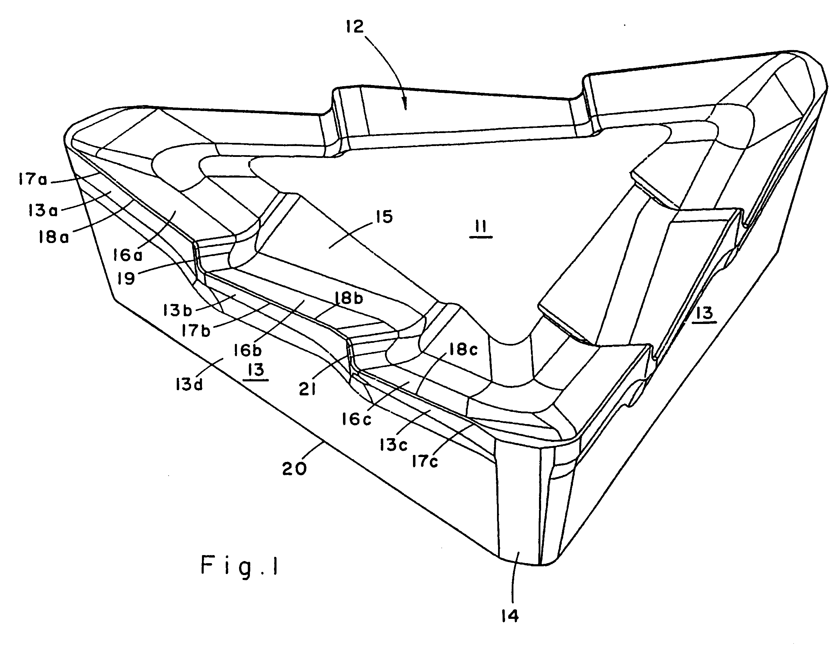

As seen in Figs. 1,2 and 3 of the drawings, the cutting insert, which is formed of tungsten carbide, is of generally triangular shape having a central, upper planar surface 11 surrounded by a peripheral, upper cutting rake surface 12. The insert is formed with a planar base surface (not seen), which is parallel with the central, planar surface 11. The insert is further formed with relief flanks 13 and, at the corners, with wipers 14 of conventional construction. Each relief flank 13 comprises three upper component relief flanks 13a, 13b, 13c, which are angularly directed with respect to each other in a manner to be described below, and a lower, planar relief flank portion 13d.

Each upper cutting rake region 12 comprises a longitudinally extending chip forming groove 15 and three component chip rake surfaces 16a, 16b, 16c.

Component cutting edges 17a, 17b, 17c are defined between the respective component relief flanks and component cutting rake surfaces via respective lands 18a, 18b, 18c.

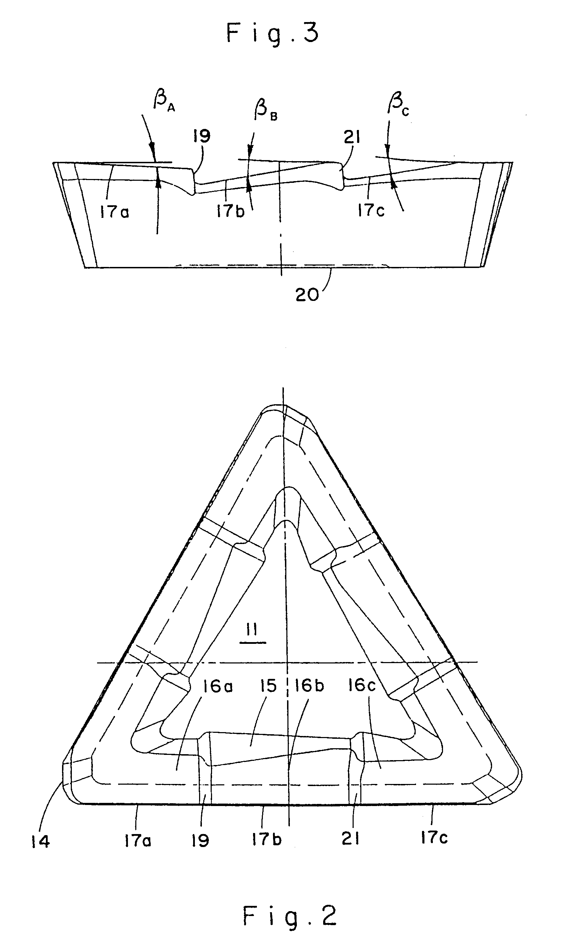

The leading component cutting edge 17a merges at its terminal extremity with the succeeding component cutting edge 17b via an intermediate edge 19 which slopes downwardly towards a base edge 20 of the insert. Similarly, the component cutting edge 17b merges with the succeeding cutting edge 17c via an intermediate edge 21, which also slopes downwardly towards the base edge 20 of the insert. As can be seen in Fig. 3 of the drawings, the component cutting edges 17a, 17b, 17c define, with respect to the base edge 20, different angles $\beta_A$, $\beta_B$, $\beta_C$, recommended ranges for these angles being

$$\beta_A = 2° - 4°$$

$$\beta_B = 10° - 12°$$

$$\beta_C = 8° - 10°$$

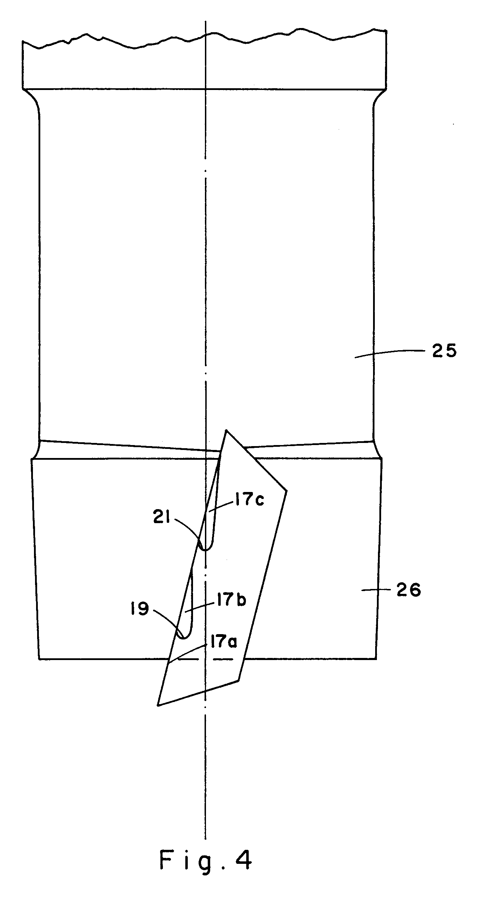

As seen in Fig. 4 of the drawings, the insert just described with reference to Figs. 1,2 and 3 is mounted in a rotary milling cutter 25 having a cylindrical holder 26, the insert being mounted so that its component cutting edges 17a, 17b, 17c present differing axial rake angles with respect to an axis of rotation of the tool. These angles can be all uniformly positive or uniformly negative. Alternatively, some of the angles may be positive and the remainder negative, or some of the angles may be positive or negative whilst the remainder may have a zero axial rake angle. Some or all of the angles may be equal or they may all vary. Furthermore, each cutting edge may be composed of two or more component cutting edges, the respective cutting edges having the same or differing numbers of component cutting edges.

Furthermore, the component cutting edges associated with a given relief flank may be equal or vary in length, as may the component cutting edges associated with two or more relief flanks.

As is clearly described and explained in the prior specification, the component cutting edges associated with each relief flank effectively overlap during a milling operation and, as a consequence, the milling operation takes place with significantly reduced "chatter" or undesired vibrations.

In order, however, to ensure that the milled surface produced with such an insert is substantially smooth, it is arranged that the successive component cutting edges associated with each relief flank are all substantially located on a curved envelope defined by the rotation of a generator about the rotational axis of the insert, whilst remaining substantially coplanar with the rotational axis.

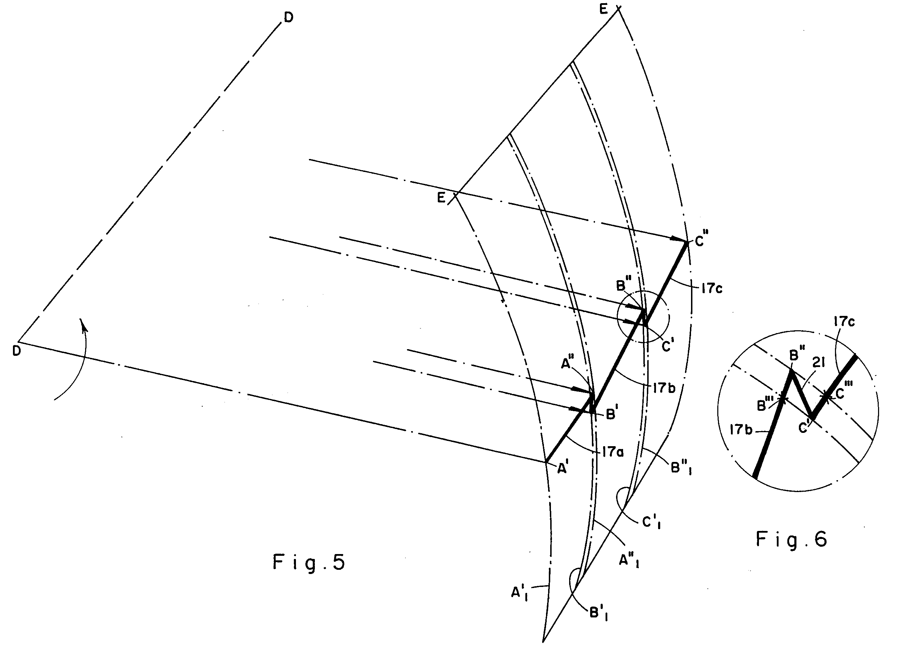

In this connection, reference will now be made to Fig. 5 of the drawings, wherein there is shown schematically the three component cutting edges 17a, 17b, 17c with their extremities respectively represented by A'A''; B'B''; and C'C''. As can be clearly seen in the enlarged detail shown in Fig. 6 of the drawings, adjacent extremities of successive component cutting edges overlap, the overlapping portions of component cutting edges 17b and 17c being shown as portions B''' - B'' and C' - C'''.

The insert whose component cutting edges 17a, 17b, 17c are schematically shown rotates about a rotary axis D - D.

The component cutting edges 17a, 17b, 17c are so shaped and oriented as to lie substantially completely on a curved surface which is generated by the rotation of a generator E - E, coplanar with the rotary axis D - D. As an illustration of the fact that all points along the component cutting edges lie on the curved surface, there are shown in the figure arcs $A'_1A''_1$; $B'_1B''_1$ and $C'_1C''_1$ which represent the respective paths of travel of the extremities A'A''; B'B'' and C'C''.

The drawing also shows the radii subtended from the rotary Axis D - D to the extremities. Where, as shown in the figure, the generator E - E is parallel to the rotary axis D - D, the generated surface is right circular and all the radii are of equal length. Clearly, where the generator is angularly directed with respect to the rotary axis, the generated surface will be conical and the radii will vary uniformly in length.

Whilst the invention has been particularly described with reference to a milling insert of triangular shape, it can equally well be rectangular or round. In all cases the use of the insert allows for the milling to be effected using the major portion of the overall length of the cutting edge with minimum vibrations or "chatter". At the same time, and by virtue of the present invention, it is possible to achieve a substantially smooth milled surface.

**Claims**

1. A cutting insert for use with a rotary milling cutter tool (25) and having a cutting edge defined between a cutting rake surface (12) and a relief flank (13, 13a, 13b, 13c) and having a base edge (20) defined between said relief flank and a base surface; said cutting edge comprising a plurality of successive component cutting edges (17a, 17b, 17c) and intermediate edges (19, 21) respectively located between successive component cutting edges; each component cutting edge having respective leading and trailing extremities, the trailing extremity of one component cutting edge merging with the leading extremity of the succeeding component cutting edge via an intermediate edge, said intermediate edge being directed from said trailing extremity of said one component cutting edge towards said base edge; successive component cutting edges overlapping so that during a milling operation successive component cutting edges overlap; characterized in that said successive component cutting edges (17a, 17b, 17c) associated with each relief flank (13a, 13b, 13c) are convex shaped and are substantially located on a curved envelope defined by the rotation of a generator (E-E) about a rotational axis (D-D) of said insert, said generator (E-E) being substantially coplanar with said rotational axis (D-D).

2. A cutting insert according to Claim 1, characterized in that said generator (E-E) is substantially parallel to said rotary axis (D-D).

3. A cutting insert according to Claim 1, characterized in that said generator (E-E) is angularly disposed with respect to said rotary axis (D-D).

4. A cutting insert according to any one of the preceding claims, characterized in that it is of substantially triangular shape.

5. A cutting insert according to Claim 1, characterized in that it is of substantially rectangular shape.

6. A cutting insert according to Claim 5, characterized in that it is of substantially oblong rectangular shape.

7. A cutting insert according to Claim 5, characterized in that it is of substantially square shape.

8. A cutting insert according to any one of the preceding claims, characterized in that said component cutting edges (17a, 17b, 17c) present axial rake angles with respect to an axis of rotation (D-D) of said tool, which angles are positive.

9. A cutting insert according to any one of Claims 1 to 7, characterized in that said component cutting edges (17a, 17b, 17c) present axial rake angles with respect to an axis of rotation (D-D) of said tool, which angles are negative.

10. A cutting insert according to any one of Claims 1 to 7, characterized in that said component cutting edges (17a, 17b, 17c) present axial rake angles with respect to an axis of rotation (D-D) of said tool, wherein some of said angles are positive and the remainder are negative.

11. A cutting insert according to any one Of Claims 1 to 7, characterized in that said component cutting edges (17a, 17b, 17c) present axial rake angles with respect to an axis of rotation (D-D) of said tool, wherein some of said angles are positive or negative and the remainder are zero.

12. A cutting insert according to any one of Claims 8 to 11, characterized in that some of said angles are equal.

**Patentansprüche**

1. Schneideinsatz für die Verwendung mit einem Drehfrässchneidwerkzeug (25) und mit einer zwischen einer Spanfläche (12) und einer Freifläche (13, 13a, 13b, 13c) gebildeten Schneidkante und einer zwischen der Freifläche und einer Basisfläche gebildeten Basiskante (20), wobei die Schneidkante mehrere aufeinanderfolgende Teilschneidkanten (17a, 17b, 17c) bzw. zwischen den aufeinanderfolgenden Teilschneidkanten angeordnete Zwischenkanten (19, 21) aufweist, jede Teilschneidkante je ein Vorder- und ein Hinterende hat, das Hinterende einer Teilschneidkante in das Vorderende einer nachfolgenden Teilschneidkante über eine Zwischenkante übergeht, die Zwischenkante von dem Hinterende der einen Teilschneidkante zur Basiskante ausgerichtet ist, und wobei sich aufeinanderfolgende Teilschneidkanten überlappen, so daß sich während eines Fräsbetriebes die aufeinanderfolgenden Teilschneidkanten überlappen, dadurch gekennzeichnet daß die aufeinanderfolgenden und mit jeder Freifläche (13a, 13b, 13c) verbundenen Teilschneidkanten (17a, 17b, 17c) konvex ausgebildet und im wesentlichen auf einer gekrümmten Einhüllenden angeordnet sind, die durch die Drehung einer Erzeugenden (E-E) um eine Drehachse (D-D) des Einsatzes gebildet wird, wobei die Erzeugende (E-E) im wesentlichen koplanar mit der Drehachse (D-D) ist.

2. Schneideinsatz nach Anspruch 1, dadurch gekennzeichnet, daß die Erzeugende (E-E) im wesentlichen parallel zu der Drehachse (D-D) ist.

3. Schneideinsatz nach Anspruch 1, dadurch gekennzeichnet, daß die Erzeugende (E-E) winkelversetzt bezüglich der Drehachse (D-D) ist.

4. Schneideinsatz nach einem der vorstehenden Ansprüche, dadurch gekennzeichnet, daß er eine im wesentlichen dreieckige Form aufweist.

5. Schneideinsatz nach Anspruch 1, dadurch gekennzeichnet, daß er eine im wesentlichen rechteckige Form aufweist.

6. Schneideinsatz nach Anspruch 5, dadurch gekennzeichnet, daß er eine im wesentlichen länglich rechtwinklige Form aufweist.

7. Schneideinsatz nach Anspruch 5, dadurch gekennzeichnet, daß er eine im wesentlichen quadratische Form aufweist.

**8.** Schneideinsatz nach einem der vorstehenden Ansprüche, dadurch gekennzeichnet, daß die Teilschneidkanten (17a, 17b, 17c) axiale Spanwinkel bezüglich der Drehachse (D-D) des Werkzeugs bilden, wobei die Winkel positiv sind.

**9.** Schneideinsatz nach einem der Ansprüche 1 bis 7, dadurch gekennzeichnet, daß die Teilschneidkanten (17a, 17b, 17c) axiale Spanwinkel bezüglich der Drehachse (D-D) des Werkzeugs bilden, wobei die Winkel negativ sind.

**10.** Schneideinsatz nach einem der Ansprüche 1 bis 7, dadurch gekennzeichnet, daß die Teilschneidkanten (17a, 17b, 17c) axiale Spanwinkel bezüglich der Drehachse (D-D) des Werkzeugs bilden, wobei einige der Winkel positiv und die anderen negativ sind.

**11.** Schneideinsatz nach einem der Ansprüche 1 bis 7, dadurch gekennzeichnet, daß die Teilschneidkanten (17a, 17b, 17c) axiale Spanwinkel bezüglich der Drehachse (D-D) des Werkzeugs bilden, wobei einige der Winkel positiv oder negativ und die anderen 0 sind.

**12.** Schneideinsatz nach einem der Ansprüche 8 bis 11, dadurch gekennzeichnet, daß einige der Winkel gleich sind.

**Revendications**

**1.** Insert de coupe destiné à être utilisé avec un outil (25) de fraisage rotatif, et possédant une arête de coupe définie entre une suface d'attaque de coupe (12) et un flanc en dépouille (13, 13a, 13b, 13c), et un bord de base (20) défini entre ledit flanc en dépouille et une surface de base; ladite arête de coupe comportant plusieurs arêtes de coupe élémentaires (17a, 17b, 17c) successives et des arêtes intermédiaires (19, 21) placées respectivement entre les arêtes de coupe élémentaires successives; chaque arête de coupe élémentaire ayant des extrémités respectives avant et arrière, l'extrémité arrière d'une arête de coupe élémentaire étant raccordée à l'extrémité avant de l'arête de coupe élémentaire suivante via une arête intermédiaire, ladite arête intermédiaire étant dirigée de ladite extrémité arrière de ladite arête de coupe élémentaire précédente vers ledit bord de base; les arêtes de coupe élémentaires successives se recouvrant mutuellement de telle manière que, pendant une opération de fraisage, les arêtes de coupe élémentaires successives se recouvrent; caractérisé en ce que lesdites arêtes de coupe élémentaires successives (17a, 17b, 17c) associées à chaque flanc en dépouille (13a, 13b, 13c) ont une forme convexe et sont placées à peu près sur une surface enveloppe courbe définie par la rotation d'une génératrice (E-E) autour d'un axe de rotation (D-D) dudit insert, ladite génératrice (E-E) étant pratiquement contenue dans le même plan que ledit axe de rotation (D-D).

**2.** Insert de coupe selon la revendication 1, caractérisé en ce que ladite génératrice (E-E) est pratiquement parallèle audit axe de rotation (D-D).

**3.** Insert de coupe selon la revendication 1, caractérisé en ce que ladite génératrice (E-E) est disposée en formant un angle avec ledit axe de rotation (D-D).

**4.** Insert de coupe selon l'une quelconque des revendications précédentes, caractérisé en ce qu'il est de forme pratiquement triangulaire.

**5.** Insert de coupe selon la revendication 1, caractérisé en ce qu'il est de forme pratiquement rectangulaire.

**6.** Insert de coupe selon la revendication 5, caractérisé en ce qu'il est d'une forme pratiquement rectangulaire oblongue.

**7.** Insert de coupe selon la revendication 5, caractérisé en ce qu'il est de forme pratiquement carrée.

**8.** Insert de coupe selon l'une quelconque des revendications précédentes, caractérisé en ce que lesdites arêtes de coupe élémentaires (17a, 17b, 17c) présentent des angles d'attaque axiaux, par rapport à un axe de rotation (D-D) dudit outil, lesquels angles sont positifs.

**9.** Insert de coupe selon l'une quelconque des revendications 1 à 7, caractérisé en ce que lesdites arêtes de coupe élémentaires (17a, 17b, 17c) présentent des angles d'attaque axiaux, par rapport à un axe de rotation (D-D) dudit outil, lesquels angles sont négatifs.

**10.** Insert de coupe selon l'une quelconque des revendications 1 à 7, caractérisé en ce que lesdites arêtes de coupe élémentaires (17a, 17b, 17c) présentent des angles d'attaque axiaux, par rapport à un axe de rotation (D-D) dudit outil, certains desdits angles étant positifs et les autres étant négatifs.

**11.** Insert de coupe selon l'une quelconque des revendications 1 à 7, caractérisé en ce que lesdites arêtes de coupe élémentaires (17a, 17b, 17c) présentent des angles d'attaque axiaux, par rapport à un axe de rotation (D-D) dudit outil, certaines angles étant positifs ou négatifs et les autres étant nuls.

**12.** Insert de coupe selon l'une quelconque des revendications 8 à 11, caractérisé en ce que certains desdits angles sont égaux.

Fig.1

EP 0 566 085 B1

# Fig.3

# Fig.2

Fig.4

Fig.5

Fig.6